Europäisches Patentamt

European Patent Office

Office européen des brevets

(19)

(11) Veröffentlichungsnummer: **0 092 061**
**B1**

(12) **EUROPÄISCHE PATENTSCHRIFT**

(45) Veröffentlichungstag der Patentschrift: 07.06.89

(51) Int. Cl.⁴: **G 06 K 7/10**

(21) Anmeldenummer: **83102802.2**

(22) Anmeldetag: **21.03.83**

(54) **Kombiniertes optisches Handlesegerät für maschinelle Zeichenerkennung mit integriertem optischen System.**

(30) Priorität: **20.04.82 DE 3214621**

(43) Veröffentlichungstag der Anmeldung:
**26.10.83 Patentblatt 83/43**

(45) Bekanntmachung des Hinweises auf die
Patenterteilung:
**07.06.89 Patentblatt 89/23**

(84) Benannte Vertragsstaaten:
**AT BE CH DE FR GB IT LI NL SE**

(56) Entgegenhaltungen:
**EP-A-0 063 243**
**US-A-3 410 991**
**US-A-3 735 350**
**US-A-3 895 350**

(73) Patentinhaber: **Siemens Aktiengesellschaft**
**Berlin und München**
**Wittelsbacherplatz 2**
**D-8000 München 2 (DE)**

(72) Erfinder: **Immler, Josef. Dipl.-Ing.**
**Schwarzäckerstrasse 72**
**D-8039 Puchheim (DE)**
Erfinder: **Van der Sel, Cornelis, Dipl.-Phys.**
**Bürgermeister-Schwaiger-Strasse 21**
**D-8018 Grafing (DE)**

Courier Press, Leamington Spa, England.

EP 0 092 061 B1

**Beschreibung**

Die Erfindung betrifft ein optisches Handlesegerät gemäß dem Oberbegriff der Patentansprüches 1 und 3.

Derartige Abtasteinrichtungen werden bei der automatischen Zeichenerkennung angewendet, um visuelle lesbare Ziffern oder Buchstaben eines Aufzeichnungsträger z.B. eines Beleges, eines Breifes oder auch eines Etikettes direkt in eine maschinell auswertbare Form umzusetzen und sie zur weiteren Verarbeitung einer datenverarbeitenden Anlage bzw. einem Terminal wie einem Drucker oder dergleichen zuzuführen.

So wird in der DE—OS 28 17 341 ein optisches Handlesegerät für maschinelle Zeichenerkennung beschrieben, das zum Lesen von normierten Klarschriften, wie der sogenannten OCR-Schrift geeignet ist.

Neben derartigen Lesegeräten zum Erfassen von Klarschriften sind Lesegeräte bekannt, mit denen Daten auf Etiketten gelesen werden können, die durch sogenannte "Strichcodes" codiert sind (Ruby Wand Light Pen, Model 1240, Spezifikationsbeschreibung).

Derartige für Stichcodemarkierungen ausgelegte Lesegeräte unterscheiden sich in ihrem Aufbau prinzipell von Klarschriftleseeinrichtungen. So wird bei Strichcodierleseeinrichtungen das Schwellenverhalten des Strichcodes über eine einzige Sensoreinrichtung mit zugehöriger Beleuchtungseinheit abgetastet und die daraus abgeleitete Impulsfolge der Erkennungseinheit zugeführt.

Strichcode und Klarschrift werden im allgemeinen Geschäftsbetrieb zur Markierung von unterschiedlichen Warengruppen verwendet. So dient die Klarschrift in erster Linie zur Markierung von Scheck, Bekleidung und sonstigen technischen Artikeln, wohingegen die Strick- oder Balkencodierung zur Kennzeichnung von Lebensmitteln verwendet wird.

Bei Warenhäusern, die beide Warengruppen im Sortiment führen, ist es zum Lesen der codierten Information deshalb notwendig, sowohl eine Leseeinrichtung für Klarschrift als auch eine Leseeinrichtung für Strichcodierung zu benutzen. Für das die Codierungen in erster Linie erfassende Kassenpersonal ist es deshalb umständlich, je nach Etikett verschiedene Handlesegeräte zu verwenden.

Aus der US-Patentschrift US—A—3 410 991 ist eine Leseeinrichtung für einen Informationsträgers bekannt. Der Informationsträger weist dabei eine Reihe von Buchstaben unter denen sich strickartige Codemarkierungen befinden auf. Zum Abtasten des Informationsträgers ist ein Abtaster vorgesehen, der die Buchstaben und die zugehörigen Codemarkierungen gleichzeitig an mehreren Punkten übereinander abtastet um möglichst große Toleranzen hinsichtlich der Vertikalverschiebung des Abtasters zulassen zu können. Eine alternative Abtastung von Klarschrift und Strichcode ist mit einer derartigen Leseeinrichtung nicht molich.

Weiters wurde in der europäischen Patentanmeldung 82 102 234.0, welche als EP—A—0 062 777 veröffentlicht worden ist und als Stand der Technik nach Aritkel 54(3) gilt bereits ein gemeinsamer Klarschrift- und Strichcodeleser vorgeschlagen, der einen einzigen Abtaster mit einer einzigen Sensorfläche für Klarschrift und Strichcode enthält.

Die Strichcodeerkennung wird dabei über die Sensorfläche für die Klarschrifterkennung vorgenommen.

Da die Strichcodeerkennung und die Erkennung von Klarschrift über eine gemeinsame Sensorfläche erfolgt, kann die erforderliche Anpassung an die verschiedenen Erkennungsbedingungen nicht ausreichend exakt genug sein. Außerdem führt der Ausfall der einzigen Sensorfläche zum Totalausfall des gesamten Gerätes.

Aufgabe der Erfindung ist es, ein optisches Handlesegerät für maschinelle Zeichenerkennung bereitzustellen, das sowohl zur Erfassung von Klarschrift als auch zur Strichcodierung verwendet werden kann und das einfach und kostengünstig ausgebildet ist, und eine hohe Betriebssicherheit aufweist.

Diese Aufgabe wird bei einem optischen Lesegerät der eingangs genannten Art gemäß den kennzeichnenden Teilen der Patentansprüche 1 und 3 gelöst.

Weitere vorteilhafte Ausführungsformen der Erdingung sind in den Unteransprüchen gekennzeichnet.

Ausführungsformen der Erfindung sind in den Zeichnungen dargestellt und werden im folgenden beispielsweise näher beschrieben. Es zeigen

Fig. 1 eine schematische Schnittdarstellung eines Kombihandlesegerätes,

Fig. 2 ein Blockschaltbild der zugehörigen Ansteuerelektronik,

Fig. 3 ein Schnittbild einer Reflektorkappe eines Kombihandlesegerätes,

Fig. 4 eine schematische Darstellung des optischen Systems eines Kombihandlesegerätes, bei dem beide Abtasteinheiten in einem optischen System integriert sind,

Fig. 5 eine schematische Darstellung des Sensorbereiches eines Kombihandlesgerätes mit integriertem optischen System;

Fig. 6 eine schematische Darstellung eines Kombihandlesegerätes mit integrierten, auswechselbaren optischen System, und

Fig. 7 eine Schnittdarstellung des optischen Systems gemäß Fig. 6.

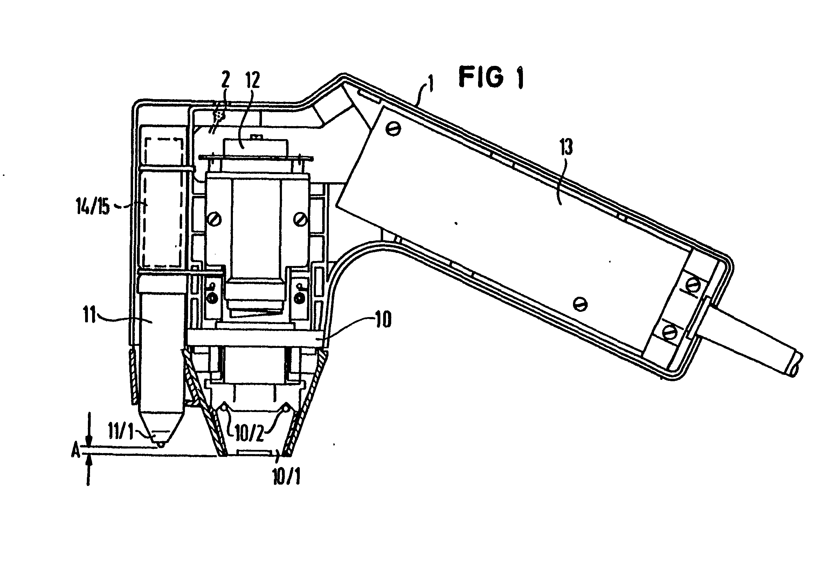

Das in der Fig. 1 dargestellte optische Handlesegerät ist sowohl zum Lesen von Klarschrift, sogenannter OCR-Schrift, als auch zum Lesen von strichcodierten Daten geeignet. Es besteht aus einem pistolenartig ausgestalteten Gehäuse 1, das sowohl eine OCR-Abtasteinrichtung 10 zur Klarschrifterkennung als auch eine Strichcode-Abtasteinrichtung 11 zum Abtasten von strichcodierten Daten auf Etiketten aufweist. Bei den Kombinationshandlesegerät entsprechend der Fig. 1 sind die Abtasteinheiten 10 und 11 vollständig getrennt und nebeneinander angeordnet. Die Abtastebenen der Abtastköpfe sind zueinander um den Abstand A, der einige Millimeter beträgt, versetzt. Dadurch kann durch einfaches Schwenken des Kombihandlesegerätes mit seinem Gehäuse 1 eine Auswahl des abzutastenden Codes bzw. ein Auflegen der zugehörigen Abtasteinrichtung auf den Code erreicht werden.

Die Abtastebenen werden dabei in der Strichcodeabtasteinrichtung 11 durch den Abtastkopf 11/1 gebildet, bei der OCR-Abtasteinrichtung 10 durch das Abtastfenster 10/1 mit der zugehörigen Beleuchtung 10/2. Im eingeschalteten Zustand des Kombihandlesegerätes, kontrolliert durch die Kontrollampe 2, wird das Kombihandlesegerät entweder mit dem Abtastfensert 10/1 zur OCR-Erkennung oder mit dem Abtastkopf 11/1 zur Strichcoderkennung über den auf Etiketten angebrachten Code geführt und damit abgetastet.

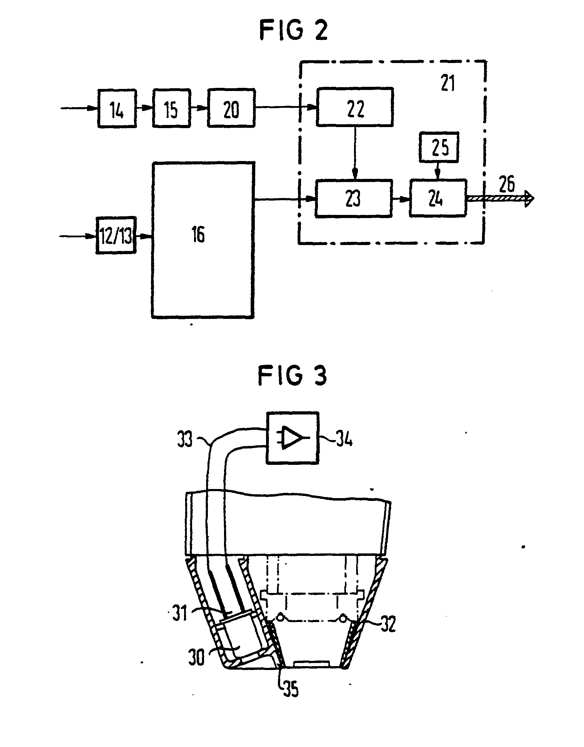

Die Abtastung selbst kann über eine Schaltungsanordnung entsprechend dem Blockschaltbild der Fig. 2 erfolgen.

Die von der OCR-Abtasteinrichtung 10 auf einem Sensorfeld aus einer Fotodiodenmatrix 12 abgebildeten Zeichensegmente werden in der Abtastelektronik 13 elektronisch geordnet und für die weiter Verarbeitung einer aus einem Mikroprozessorsystem bestehenden OCR-Verarbeitungselektronik 16 in digitalisierter Form zugeführt. Die Abtastelektronik 16 wertet das aufbereitete Abtastmuster entsprechend den Verfahren der deutschen Offenlegungsschriften DE—A—28 16 325 oder DE—A—28 17 341 aus und führt die Information in Form von Datenblöcken der modifizierten Strichcode-Verarbeitungselektronik 21 zur Weiterverarbeitung zu. Die strichcodierten Optosignale der Abtasteinheit 11 werden in einem optoelektronischen Wandler 14 in elektronische Signale umgewandelt und einem Analogsignalverstärker 15 und einem nachgeschalteten Analog-Digital-Wandler 20 digitalisiert und ebenfalls der Strichcode-Verarbeitungselektronik 21 zugeführt. Diese mit der OCR-Verarbeitungselektronik 16 in einem Gehäuse untergebrachte Strichcode-Verarbeitungselektronik 21 wertet in der Strichcode-Verarbeitungseinheit 22 die gelesenen, über den Analog-Digital-Wandler 20 digitalisierten Strichbreiten aus, blendet Störsignale aus, ordnet die erkannte Strichordnung einem von N-Strichcodes zu, stellt fest in welcher Richtung (vor- oder rückwarts) gelesen wurde wertet den erkannten Code aus und führt wine von dem betreffenden Code abhängige Zahlenprüfung durch.

Weil beim Abtasten eines bestimmten Codes auch der Abtaster des anderen Codes irgendwelche Hell-Dunkel-Übergänge auswertet und damit sowohl in der OCR-Verarbeitungselektronik 16 als auch in der Strichcode-Verarbeitungselektronik 22 ein Verarbeitung stattfindet, wedef die jeweils erzeugten Ergebnisse einer Plausibilitätskontrolle unterworfen, die in einer für beide Abtastsysteme gemeinsamen Steuereinheit 23 stattfindet. Diese Steuereinheit 23 ist derart ausgebildet, daß sie einerseits als Weiche zwischen den Abtasteinheiten dient, andererseits die Steuerbefehle für die Abtasteinheiten erzeugt. Sie enthält u.a. eine Plausibilitäts-Kontrolanordnung, die die von den Auswerteschaltungen der Abtasteinrichtung gelieferten Erkennungsdaten einer Plausibilitätskontrolle auf ihren Wahrheitsgehalt nach dem Prinzip der Wahrscheinlichkeit unterzieht. Abhängig vom Ergebnis dieser Untersuchung werden entweder den aus der ORC-Verarbeitungselektronik 16 oder den aus der Strichcode-Verarbeitungselektronik 12 kommenden Datenblöcken (Erkennungsdatenblöcken) einige Steuersignale hinzugefüft, aus denen ersichtlich ist, ob es sich jeweils um einen OCR- oder Strichcodedatenblock handelt.

Eine nachfolgende Schnittstellenelektronik fügt die Datenblöcke entsprechend den von einem Schalter 25 ausgehenden Steuersignalen in eine entsprechende Schnittstellenroutine ein und überträgt sie über eine Hardware-Schnittstelle 26 an das angeschlossene Terminal. Die Schalterstellungen des Schalters 25 sind dabei abhängig von dem angeschlossenen Terminal und den gewählten Betriebsarten Nach der Übertragung ist die als Mikroprozessorsystem ausgebildete Verarbeitungselektronik 21 zur erneuten Auswertung von strichcodierten Daten und den zugehörigen verarbeiteten OCR-Daten frei.

Neben der in der Fig. 1 dargestellten Ausführungsform des Kombihandlsegerätes mit zwei getrennten Abtasteinheiten sind noch andere Ausführungsformen denkbar. So ist es entsprechend der Darstellung der Fig. 3 möglich, die Reflektorkappe 32 der OCR-Abtasteinheit zu vergrößern und in dieser Reflektorkappe 32 in Form eines optischen Reflexsensors 30 den Strichcodeabtaster zu integrieren, wobei beide Systeme durch eine Trennwand 35 getrennt sind. Der Aufnahmebereich des Reflexsensors 30 ist insgesamt als Haltevorrichtung ausgebildet, wobei der Reflexsensor 30 über eine Feder 31 in der Halterung festgehalten wird.

Nach dem Abnehmen der Reflektorkappe und der Haltefeder 31 kann der Reflexsensor 30 aus der Reflektorkappe abgezogen werden, womit sich die Wartungs-, Prüf- und Montagearbeiten erleichtern lassen. Eine mehradrige, geschirmte Litze 33 verbindet den optischen Reflexsensor mit einem Verstärker 4, der am Analogverstärker 15 der Fig. 2 entspricht.

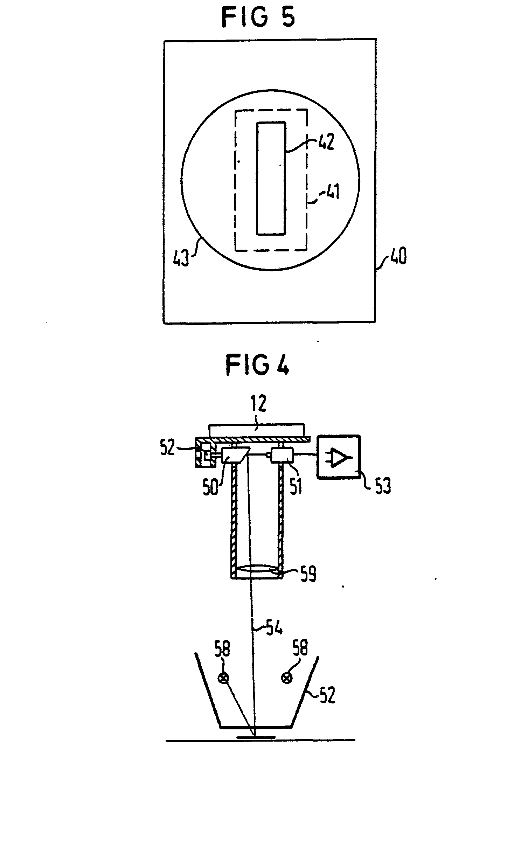

Eine weiter Ausgestaltung des optischen Systems des Kombihandlesegerätes ist in der Fig. 4 dargestellt. Bei dieser Ausführungsform sind beide Abtasteinheiten in der OCR-Abtasteinheit insoweit integriert, als die Abtastung der codierten Daten ebenfalls durch die Reflektorkappe 32 der OCR-Abtasteinheit erfolgt. Das Kombihandlesegerät weist deshalb nur ein einziges Abtastfenster für beide Abtasteinheiten auf. Zu diesem Zwecke wird unter Mitbenutzung der Beleuchtungseinrichtung 58 der OCR-Abtasteinheit mit zugehöriger Sensorfläche 12 und des zugehörigen Objektives 59 der Abbildungseinheit ein Teil des von dem Code reflektierten Lichtes mittels des gegenüber der optischen Achse um 45° geneigten Spiegels 50 ausgeblendet und einem

entsprechenden Struchcodedetektor 51 zugeführt. Der Abstand des Spiegels 50 zum Strichcodedetektor 51 läßt sich über eine Justierschraube 52 verändern, um eine Maximalabbildungsschärfe am Strichcodedetektor 51 einzustellen. Die Machverarbeitung der Ausgangssignale des Strichcodedetektors 51 erfolgt über einen Verstärker 53, der dem Analogverstärker 15 der Fig. 1 entspricht.

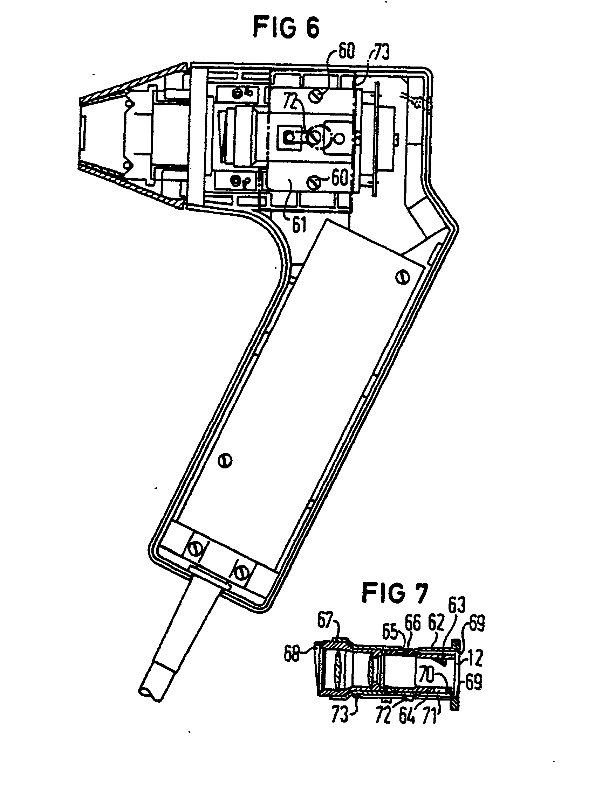

Diese Mitbenutzung der Lichtquelle und des Objektives der OCR-Abtasteinheit für das Strichcodelesen durch Ablenkung eines Teiles des reflektierten Lichtes mittels des Umlenkspiegels auf den Strichcodedetektor ist möglich, weil der auf der Diodenmatrix 40 der OCR-Abtasteinheit belichtete Bereich 41, der der Reflektorkappenöffnung der Reflektorkappe 32 entspricht, größer ist, als die Fläche aller Fotodioden 42. Die Fig. 5 macht dies anschaulich. Daben entspricht der Teil 43 dem beleuchteten Bereich und wie beschrieben der Teil 42 dem wirksamen Bereich der Fotodiodenmatrix der OCR-Abtasteinrichtung und der Teil 41 der Reflektorkappenöffnung.

Eine weitere vorteilhafte Ausführungsform des Kombihandlesegerätes mit auswechselbaren optischen System ist in den Fig. 6 und 7 dargestellt. Das Kombilesegerät gemäß Fig. 6 enthält dabei ein im Gehäuse des Kombilesegerätes über Schrauben 60 auswechselbar befestigtes integriertes optisches System 61, das die Abbildungs-optik und die Sensorflächen sowohl für Strichcode als auch für Klarschrift enthält. Es besteht aus einem rohrförmigen Trägerteil 62 aus Kunststoff mit darin längsverschieblich geführten, einen Winkelspiegel 63 aufnehmenden Justierrohr 64 aus Metall. Dieses Justierrohr ist uber eine im rohrförmigen Trägerteil 62 angeordnet Justieröffnung 65 von außen zugänglich und trägt eine Einkerbung 66, über die das Justierrohr 64 zum Justieren bewegt werden kann. Der Unterteil des rohrförmigen Trägerteiles 62 ist als Tubusführung 67 für die eigentliche Abbildungsoptik ausgebildet, wobei die Abbildungsoptik selbst wiederum eine eigene Halterung 68 aufweist. Die Tubusführung 67 dient dabei als Paßführung für die Halterung 68.

Das obere Ende des rohrförmigen Trägerteiles weist eine weitere Paßführung 69 zur Aufnahme der Sensorfläche 12 für die Klarschrifterkennung auf. Seitlich an dem die rohrförmigen Trägerteil ist auf einer Leiterplatte die Sensorfläche 70 für die Strichcodeerkennung befestigt. Die Sensorflä-che steht dabei über eine Lichtöffnung 71 mit dem Strahlgang des Winkelspiegels 63 in Verbindung. Durch den Winkelspiegel 63 wird dabei ein Teil des Abbildungsbereiches zur Strichcodeerkennung ausgeblendet.

Die besondere Ausgestaltung des auswechselbaren optischen Systems ermöglicht eine besonders einfache Justierung des Winkelspiegels 63 und zwar wird nach der Befestigung der Sensorflächen 12 und 70 über einen an der Einkerbung 68 angesetzten Schraubenzieher das Justierrohr 64 verschoben und nach der Einstellung über eine Justierschraube 72 fixiert.

Das rohrförmige Trägerteil 62 nimmt als zentrale Halterung sowohl die Optik als auch die Sensorflächen auf, damit ergibt sich eine beson-ders paßgenaue und gegenüber Temperatur-schwankungen und Erschütterungen besonders unempfindliche Zuordnung der Einzelelemente des System zueinander. Das gesamte optische System läßt sich vor dem Einsetzen in das Handlesegerät zusammensetzen und justieren, was die Fertigung wesentlich erleichtert.

Durch die Ausführungsform entsprechend der Fig. 4, 6 und 7 ist es möglich, über dieselbe Leseöffnung sowohl OCR-Zeichen als auch Strichcode zu lesen. Damit bleibt das handliche Design eines OCR-Leser erhalten und die konstruktiven Änderungen bleiben auf interne Änderungen des Objektivträgers beschränkt. Es ergibt sich suzätzlich noch eine höhere Erkennungssicherheit, weil der Strichcode-Detektor strichförmig ausgefürt werden kann. Dadurch stören Unterbrechungen in den Strichen, wie sie bei Matrixdruckern oder Leserdruckern vorkommen nicht so, wie bei punktförmigen Detektoren. Da keine zusätzliche elektronische Leistung aufgewendet werden muß, resultiert keine zusätzliche Erwärmung des gesamten Lesekopfes. Eine zusätzliche Verminderung der Wärmeleistung ergibt sich durch die Verwendung der Beleuchtungseinheit 58, sowohl für die OCR-Abtastung als auch für die Strichcodeabtastung.

## Patentansprüche

1. Optisches Handlesegerät für die maschinelle Zeichenerkennung, bestehend aus einer manuell längs einer Druckzeile über einen abzutastenden Datenträger geführten ersten Abtasteinheit (10) zur Klarschrifterkennung, die eine Lichtquelle zum Beleuchten und ein Sensorfeld aus einer Fotodiodenmatrix zum Abtasten eines Abtastfensters des Datenträgers enthält, aus einer zweiten Abtasteinheit (11) zur Strichcodeerkennung mit zugehöriger Beleuchtung und Sensor und aus einem, für beide Abtasteinheiten (10, 11) gemeinsamen pistolenartigen Gehäuse (1) dadurch gekennzeichnet, daß eine beide Abtasteinheiten (10, 11) gemeinsam aufnehmende Reflektorkappe (32) vergesehen ist, die eine die optischen Kanäle der beiden Abtasteinheiten trennende gemeinsame Trennwand (35) enthält.

2. Optisches Handlesegerät nach Anspruch 1, dadurch gekennzeichnet, daß der optische Kanal zur Strichcodeerkennung als Aufnahmevorrichtung zum auswechselbaren Befestigen eines Reflexionsabtasters (30) ausgebildet ist.

3. Optisches Handlesegerät für die maschinelle Zeichenerkennung, bestehend aus einer manuell längs einer Druckzeile über einen abzutastenden Datenträger gegührten ersten Abtasteinheit zur Klarschrifterkennung, die eine Lichtquelle (58) zum Beleuchten und ein Sensorfeld (12) aus einer Fotodiodenmatrix zum Abtasten eines Abtastfensters des Datenträgers enthält, aus einer zweiten Abtasteinheit zur Strichcodeerkennung und aus einem für beide Abtasteinheiten gemeinsamen pistolenartigen Gehäuse, dadurch gekennzeichnet, daß für die Abtasteinrichtung zur Strichcodeerkennung ein das zugehörige Abtastsignal aus einer für beide Abtasteinheiten gemeinsamen Abtastöffnung des Handlesegerätes ausblendendes optisches System (50) mit zugehörigem Sensor (51) vorgesehen ist.

4. Optisches Handlesegerät nach Anspruch 3, dadurch gekennzeichnet, daß das optische System einen justierbaren Winkelspiegel (50) enthält.

5. Optisches Handlesegerät nach Anspruch 4, dadurch gekennzeichnet, daß das optische System (61) ein im Gehäuse des Handlesegerätes auswechselbar befestigbares, die Abbildungsoptik und die Sensorflächen (12, 70) tragendes rohrförmiges Trägerteil (62) aufweist, in dem ein den Winkelspiegel (63) aufnehmendes, über eine Justieröffnung (65) justierbares Justierrohr (64) längs verschieblich arretierbar geführt ist.

6. Optisches Handlesgerät nach Anspruch 5, dadurch gekennzeichnet, daß das rohrförmige Trägerteil (62) an seinem hinterem Ende als Tubusführung (67) für die Abbildungsoptik ausgebildet ist und an seinem oberen Ende die Sensorfläche (12) für die Klarschrifterkennung und, seitlich über eine Öffnung (71) mit dem Strahlengang des Winkelspiegels (63) verbunden, die Sensorfläche (70) zur Strichcodeerkennung trägt.

**Revendications**

1. Appareil portatif de lecture optique pour la reconnaissance automatique de caractères, comprenant une première unité d'exploration (10) pour la reconnaissance de l'écriture en clair, qui est guidée manuellement le long d'une ligne imprimée sur un support de données à explorer et qui contient une source lumineuse pour l'éclairage et une plage de détection constituée par une matrice de photodiodes pour l'exploration d'une fenêtre d'exploration du support de données, une seconde unité d'exploration (11) pour la reconnaissance de codes à barres, avec un éclairage et un détecteur correspondants, ainsi qu'un corps (1) en forme de pistolet, qui est commun aux deux unités d'exploration (10, 11), caractérisé en ce qu'il est pourvu d'un embout réflecteur (32) recevant collectivement les deux unités d'exploration (10, 11) et présentant une cloison (35) commune qui sépare les voies optiques des deux unités d'exploration.

2. Appareil selon la revendication 1, caractérisé en ce que la voie optique pour la reconnaissance de codes à barres est réalisé comme un dispositif récepteur pour la fixation interchangeable d'un analyseur à réflexion (30).

3. Appareil porpatif de lecture optique pour la reconnaissance automatique de caractères, comprenant une première unité d'exploration pour la reconnaissance de l'écriture en clair, guidée manuellement le long d'une ligne imprimée sur un support de données à explorer, qui contient une source lumineuse (58) pour l'éclairage et une plage de détection (12) constituée d'un matrice de photodiodes pour l'exploration d'une fenêtre d'exploration du support de données, une seconde unité d'exploration pour la reconnaissance de codes à barres et un corps en forme de pistolet commun aux deux unités d'exploration, caractérisé en ce qu'il possède, pour le dispositif d'exploration destiné à la reconnaissance des codes à barres, un système optique (50), comprenant un détecteur (51) correspondant, qui extrait le signal d'exploration associé d'une ouverture exploration commune aux deux unités d'exploration.

4. Appareil selon la revendication 3, caractérisé en ce que le système optique contient un miroir en coin (50) ajustable.

5. Appareil selon la revendication 4, caractérisé en ce que le système optique (61) comporte un support tubulaire (62) qui peut être fixé de façon interchangeable dans le corps de l'appareil portatif de lecture et qui supporte l'optique de reproduction et les surfaces de détection (12, 70), support dans lequel peut coulisser longitudinalement, en étant guidé, un tube d'ajustement (64) blocable, dans lequel est disposé un miroir en coin (63) et qui peut être ajusté à travers une ouverture d'adjustement (65).

6. Appareil selon la revendication 5, caractérisé en ce que le support tubulaire (62) est réalisé, à son extrémité arrière, comme un guide-tube (67) pour l'optique de reproduction et qu'il porte à son extrémité supérieure la surface de détection (12) pour la reconnaissance de l'écriture en clair, de même que la surface de détection (70) pour la reconnaissance des codes à barres, laquelle communique latéralement à travers une ouverture (71) avec la marche des rayons du miroir en coin (63).

**Claims**

1. Optical manual reading device for the machine recognition of marks, consisting of a first scanning unit (10), which is guided manually along a print line over a data carrier to be scanned, for optical character recognition, and which contains a light source for the illumination and a sensor field comprising a photodiode matrix for the scanning of a scanning window of the data carrier, of a second scanning unit (11) for bar-code recognition, with associated illumination and sensor, and of a common gun-like housing (1) for both scanning units (10, 11), characterized in that a reflector cap (32) is provided, which commonly accommodates both scanning units (10, 11) and contains a common separating wall (35), separating the optical channels of the two scanning units.

2. Optical manual reading device according to Claim 1, characterized in that the optical channel for bar-code recognition is designed as a receiving device for the interchangeable fastening of a reflection scanner (30).

3. Optical manual reading device for the machine recognition of marks, consisting of a first scanning unit, which is guided manually along a print line over a data carrier to be scanned, for optical character recognition, and which contains a light source (58) for the illumination and a sensor field (12) comprising a photodiode matrix for the scanning of a scanning window of the data carrier, of a second scanning unit for bar-code recognition and of a common gun-like housing for both scanning units, characterized in that, for the scanning device for bar-code recognition, an optical system (50) masking the associated scanning signal from a common scanning opening for both scanning units of the manual reading device, with associated sensor (51), is provided.

4. Optical manual reading device according to Claim 3, characterized in that the optical system includes an adjustable angled mirror (50).

5. Optical manual reading device according to Claim 4, characterized in that the optical system (61) has a tubular support part (62), which can be fastened interchangeably in the housing of the manual reading device, supports the imaging optics and the sensor surfaces (12, 70) and in which an adjusting tube (64), accommodating the angled mirror (63) and adjustable via an adjusting opening (65), is guided longitudinally displaceably in a lockable manner.

6. Optical manual reading device according to Claim 5, characterized in that the tubular support part (62) is designed at its rear end as tube guide (67) for the imaging optics and supports on its upper end the sensor surface (12) for optical character recognition and, connected at the side via an opening (71) to the path of rays of the angled mirror code (63) supports the sensor surface (70) for bar-code recognition.

FIG 1

EP 0 092 061 B1

## FIG 2

## FIG 3

## FIG 5

## FIG 4

## FIG 6

## FIG 7